# EUROPÄISCHE PATENTANMELDUNG

(11) **EP 1 997 617 A2**
(43) Veröffentlichungstag der Anmeldung: **03.12.2008**
(21) Anmeldenummer: 08008624.2
(22) Anmeldetag: 07.05.2008
(51) Int. Cl.: B32B 5/18

(54) **Isolierelement mit Sandwich-Aufbau**

(30) Priorität: 23.05.2007 DE 202007007323 U
(71) Anmelder: GUMMI-WELZ GmbH u. Co. KG GUMMI-KUNSTSTOFFTECHNIK-SCHAUMSTOFFE, 89231 Neu-Ulm (DE)
(72) Erfinder: Fritsche, Wolfgang, 89134 Blaustein (DE); Grein, Horst, 34637 Schrecksbach (DE)
(74) Vertreter: König, Beate

(57) **Zusammenfassung**

Ein Isolierelement gemäß der Erfindung besteht aus einer außen liegenden Schicht (2) aus höher wärmebeständigem geschlossenporigem Schaumstoff und einer dieser benachbarten innen liegenden Schicht (3) aus geringer wärmebeständigem geschlossenporigem Schaumstoff, die mit einander verbunden sind.

## Beschreibung

Die Erfindung betrifft ein Isolierelement mit Sandwich-Aufbau.

Zum Schutz gegen zu hohe Wärme- oder Schallbelastungen werden Einbauteile, Karosserieteile, etc. in Kraftfahrzeugen und Flugzeugen mit isolierenden Verkleidungen ausgestattet. Ebenso ist es üblich, an und in Gebäuden eine Wärme- oder Schalldämmung vorzusehen.

Beispielsweise an der Stirnwand im Motorraum oder im Bereich des Getriebetunnels von Kraftfahrzeugen ist eine Verkleidung mit Schichten aus Fasern, Mineralwolle (5 bis 20 mm), Metallfolie (50 bis 500 µm), Textilfaservlies (5 bis 40 mm) und gegegebenenfalls Deckvlies gemäß DE 197 20 537 A1 vorgeschlagen worden. Als Bindemittel für die Vliesstoffe werden unter anderem Polyproyplen, Polyethylen und/oder Ethyl-VinylacetatCopolymere angegeben. Die Schichtdicke der jeweiligen Schichten kann dabei den jeweiligen Erfordernissen angepasst werden. Die Gesamtdicke dieser Verkleidung ist üblicherweise 10 bis 40 mm.

In der DE 200 04 796 U1 ist ein bahnen- oder plattenförmiges Schalldämmelement mit einer Schicht aus Kohlefasern oder anderen akustisch wirksamen Werkstoffen beschrieben, auf dessen Oberfläche eine Sperrschicht aus thermoplastischem Werkstoff, isnbesondere aus Polypropylen, angeordnet ist. Diese Schichten können mit einem zusätzlichen Schalldämmmterial aus geschäumtem oder Vlieswerkstoff kombiniert sein, das mit einer Selbstklebeausrüstung für die Montage versehen ist.

Eine schallabsorbierende Verkleidung für Kraftfahrzeuge, insbesondere Motorraumverkleidung, gemäß WO 2006/084677 A1 weist mindestens eine offenzellige Schaumstofflage auf, die zumindest einseitig mit einem Abdeckvlies kaschiert ist, wobei die Verbindung der beiden Lagen durch eine offenporige Beschichtung erfolgt. Diese Beschichtung ist aus einer Pulvermischung gebildet, die aus mindestens einer thermoplastischen Komponente, einer diese vernetzenden Komponente und mineralischen Mikrokörpern zugeswammengesetzt, insbesondere um die Formstabilität zu verbessern.

Zur Wärme- oder Schallisolierung beispielsweise in Flugzeugen ist eine Isolierdecke vorgeschlagen worden, die im wesentlichen frei von Glasfasern ist. Sie liegt vorzugsweise in Form einer Vliesmatte mit thermoplastischen Fasern vor. Thermoplastisches Polyolefin, beispielsweise Polyethylen, Polypropylen, Ethylen-Propylen-Copolymer oder einer Kombination davon, dient als äußere Umhüllung für eine gute Beständigkeit gegenüber der Aufnahme von Feuchtigkeit. Im Inneren befinden sich eine Isolierschicht aus Fasern oder Schaum, die als Verbund mit einer hochtemperaturfesten Schicht aus Keramik, Glasfasern vorgesehen werden kann.

Der Erfindung liegt die Aufgabe zugrunde, ein Isolierelement zu schaffen, das keine Flüssigkeiten aufnimmt oder durchlässt, schwer entflammbar und selbst verlöschend ist und auch mit größeren Dämmschichtdicken wirtschaftlich einsetzbar ist.

Diese Aufgabe ist durch die Erfindung bei einem Isolierelement mit den Merkmalen des Anspruchs 1 gelöst. Vorteilhafte Weiterbildungen des Isolierelements sind Gegenstand der Unteransprüche.

Ein Isolierelement gemäß der Erfindung besteht somit aus einer außen liegenden Schicht aus höher wärmebeständigem geschlossenporigem Schaumstoff und einer dieser benachbarten innen liegenden Schicht aus geringer wärmebeständigem geschlossenporigem Schaumstoff, die mit einander verbunden sind.

Dieses Isolierelement zeichnet sich somit auf der Außenseite mit einem Material aus, dass die erforderliche Temperaturbeständigkeit für die dort herrschenden Umgebungsbedingungen aufweist. Außerdem nimmt dieses Material keine Flüssigkeiten wie z.B. Wasser auf und erfüllt auch die häufig gestellte Bedingung, dass keine Flüssigkeiten eindringen sollen (Penetrationsprüfung z.B. nach UNE 53-335-78 Parte V [Diesel]). Zusammen mit beispielsweise dem Karosserieblech bildet es eine schwer entflammbare und selbst verlöschende Schutzschicht.

Auf der Innenseite kann ein Material vorgesehen sein, das eine geringere Wärmebeständigkeit hat und damit kostengünstiger ist. Die Dicke des auf der Außenseite liegenden Materials mit der höheren Wärmebeständigkeit ist dabei so gewählt, dass der Temperaturabfall ausreichend bis auf Temperaturen an der Unterseite ist, die den Spezifikationen des auf der Innenseite befindlichen Materials entsprechen. Abgesehen von dieser Bedingung können die Gesamtdicke des Isolierelements und die einzelnen Schichtdicken entsprechend den jeweiligen Erfordernissen variiert werden. Ohne weiteres kann das Isolierelement beispielsweise mit einer Dicke von 70 mm eingesetzt werden, ohne dass dies einen Grenzwert für die Dicke darstellt.

Vorzugsweise sind die beiden Schaumstoffschichten miteinander laminiert. Als Material für die beiden Schaumstoffschichten können beispielsweise Polyolefine eingesetzt werden, z.B. außen Polypropylen und innen Polyethylen.

Es kann je nach Einsatzfall zweckmäßig sein, dass die Schicht aus höher wärmebeständigem Schaumstoff und/oder die Schicht aus weniger wärmebeständigem Schaustoff mehrlagig ist.

Bei einer vorteilhaften Ausführungsform des erfindungsgemäßen Isolierelements ist die Schicht aus höher wärmebeständigem Schaumstoff auf der Außenseite mit einer wärmereflektierenden Folie, insbesondere Metallfolie, versehen. Diese strahlt bereits einen wesentlichen Teil der Wärme zurück, so lediglich ein Teil der vorherrschenden Temperaturen über die Schichten des Isolierelements abgebaut werden muss. Ist die Außentemperatur nicht so hoch oder eine Rückstrahlung der auftreffenden Wärmestrahlung nicht erforderlich, kann die wärmereflektierende Folie entfallen.

Als Folienmaterial wird vorzugsweise Metall, insbesondere Aluminium, verwendet. Die wärmereflektierende Folie ist zweckmäßig auf die Schaumstoffschichten aufkaschiert.

Es kann auch vorgesehen werden, alternativ zu einer wärmereflektierenden Folie einen anderen Werkstoff, wie z.B. Kohlefaservlies, auf die Außenseite der Schaumstoffschicht mit höherer Wärmebeständigkeit aufzubringen.

Während auch andere Befestigungsmöglichkeiten wie Klemmen und Spannen möglich sind, kann auf der Innenseite des Isolierelements für die Befestigung beispielsweise an einer Fahrzeugkarosserie eine Befestigungsfolie vorgesehen sein. Diese ist vorzugsweise selbstklebend. Vorteilhaft ist es, sie aufzukaschieren. Sie kann aber je nach den Anforderungen an das Isolierelement auch entfallen.

Das erfindungsgemäße Isolierelement ist verwendbar als Bahnen- oder Lagenmaterial. Es kann auch in Form von Platten oder Matten vorgesehen werden, insbesondere bei größeren Material-dicken.

Obenstehend ist zwar die Verwendung des erfindungsgemäßen Isolierelements für Kraftfahrzeuge beschrieben worden, wobei hier selbstverständlich Personenkraftwagen und Nutzfahrzeuge eingeschlossen sind. Ganz offensichtlich eignet sich dieses Isolierelement jedoch für eine Vielzahl anderer Bereiche, etwa im Bau oder zur Isolierung jeglicher Verkleidungen, Hohlräume, und es kann auch auf den zu isolierenden Gehäusebereichen außen aufgebracht werden.

Die Erfindung wird im folgenden weiter anhand von Ausführungsbeispielen und der Zeichnung beschrieben. Diese Darstellung dient lediglich zur Veranschaulichungszwecken und soll die Erfindung nicht auf die konkret angegebenen Merkmalskombinationen einschränken. Es zeigen:

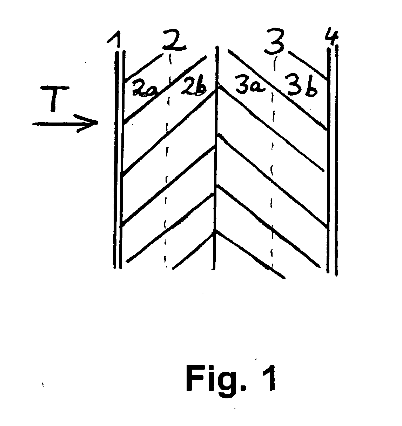

- Fig. 1: eine schematische Schnittansicht durch ein Isolier-element gemäß der Erfindung und
- Fig. 2: eine schematische Schnittansicht ähnlich Fig. 1 mit Temperaturdiagramm.

In der Zeichnung ist ein Ausführungsbeispiel eines erfindungsgemäßen Isolierelements veranschaulicht. Dieses umfasst je eine Schicht aus höher und geringer wärmebeständigem Schaumstoff, die außen eine wärmereflektierende bzw. zur Befestigung dienende Folie tragen.

Im einzelnen: Das Isolierelement weist auf der den erhöhten Temperaturen bzw. Lärmpegel zugewandten Seite (Außenseite) eine wärmereflektierende Folie 1 auf, bei der es sich im vorliegenden Beispiel um eine Aluminiumfolie handelt. Die Aluminiumfolie 1 ist auf die Schicht 2 aus höher wärmebeständigem Schaumstoff aufkaschiert.

Die Schaumstoffschicht 2 ist beim gezeigten Ausführungsbeispiel zweilagig. Die beiden Lagen 2a und 2b sind zusammen laminiert. Die Schaumstoffschicht 2 ist aus Polypropylen.

Unter der Schaumstoffschicht 2 befindet sich die zweite Schaumstoffschicht 3, die jedoch weniger wärmebeständig ist. Sie ist wiederum zweilagig und ihre beiden Lagen 3a und 3b sind zusammen laminiert, ebenso die beiden Schaumstoffschichten 2 und 3. Die Schaumstoffschicht 3 ist aus Polyethylen.

Auf der Innenseite, also gegenüberliegend zur Aluminiumfolie 1, ist die Schaumstoffschicht 3 mit der erwähnten Befestigungsfolie 4 versehen. Diese ist selbstklebend.

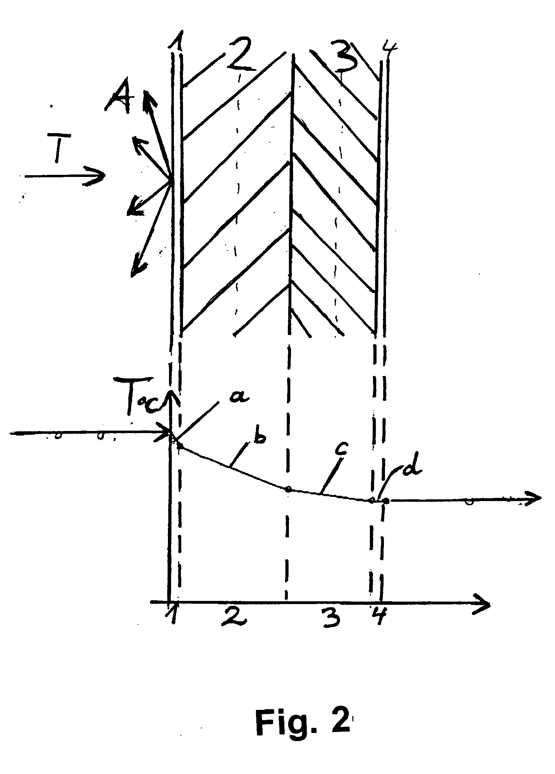

Die Funktion des erfindungsgemäßen Isolierelements ist folgende, wie anhand des in Fig. 2 integrierten Temperaturdiagramms veranschaulicht wird. Die Ordinate stellt die Temperatur T (°C) und die Abszisse die Dicke der Schichten dar. Die Aluminiumfolie 1 reflektiert einen Teil der auf die Oberfläche auftreffenden Wärmestrahlung. Dies ist durch die Pfeile A veranschaulicht. Ein Teil der Wärme wird durch die Aluminiumfolie 1 abgeleitet, wie ebenfalls durch einen Pfeil angedeutet ist. Der Aluminiumfolie kann somit ein kleiner Temperaturgradient zugeordnet werden, wie der Abschnitt a des Temperaturdiagramms veranschaulicht. In der Schaumstoffschicht 2, die von den beiden Schaumstoffschichten die höhere Wärmebeständigkeit hat, nimmt die Temperatur von außen nach innen ab, wie der Abschnitt b des Temperaturdiagramms zeigt. Im Abschnitt c des Temperaturdiagramms, der den Temperaturverlauf in der zweiten Schaumstoffschicht 3 veranschaulicht, nimmt die Temperatur über die Schichtdicke ebenfalls, aber mit geringerem Gradienten, ab. Der Temperaturgradient über die Befestigungsfolie 4 ist klein, wie der Abschnitt d des Temperaturdiagramms zeigt.

## Patentansprüche

1. Isolierelement, bestehend aus einer außen liegenden Schicht (2) aus höher wärmebeständigem geschlossenporigem Schaumstoff und einer dieser benachbarten innen liegenden Schicht (3) aus geringer wärmebeständigem geschlossenporigem Schaumstoff, die mit einander verbunden sind.

2. Isolierelement nach Anspruch 1, **dadurch gekennzeichnet, dass** die Schicht (2) aus höher wärmebeständigem Schaumstoff aus Polypropylen ist.

3. Isolierelement nach Anspruch 1 oder 2, **dadurch gekennzeichnet, dass** die Schicht (3) aus weniger wärmebeständigem Schaumstoff aus Polyethylen ist.

4. Isolierelement nach einem der Ansprüche 1 bis 3, **dadurch gekennzeichnet, dass** die Schichten (2, 3) aus höher und weniger wärmebeständigem Schaumstoff laminiert sind.

5. Isolierelement nach einem der Ansprüche 1 bis 4, **dadurch gekennzeichnet, dass** die Schicht (2) aus höher wärmebeständigem Schaumstoff und/oder die Schicht (3) aus weniger wärmebeständigem Schaustoff mehrlagig ist.

6. Isolierelement nach einem der Ansprüche 1 bis 5, **dadurch gekennzeichnet, dass** die Schicht (2) aus höher wärmebeständigem Schaumstoff auf der Außenseite mit einer wärmereflektierenden Folie (1), insbesondere Metallfolie, versehen ist.

7. Isolierelement nach einem der Ansprüche 1 bis 6, **dadurch gekennzeichnet, dass** die wärmereflektierende Folie (1) auf die Schicht (2) aus höher wärmebeständigem Schaumstoff aufkaschiert ist.

8. Isolierelement nach einem der Ansprüche 1 bis 7, **dadurch gekennzeichnet, dass** die Schicht (3) aus weniger wärmebeständigem Schaumstoff auf der Innenseite, d.h. entgegengesetzt zur Schicht (2) aus höher wärmebeständigem Schaumstoff, mit einer Befestigungsfolie (4) versehen ist.

9. Isolierelement nach Anspruch 8, **dadurch gekennzeichnet, dass** die Befestigungsfolie (4) selbstklebend ist.

10. Isolierelement nach einem der Ansprüche 1 bis 9, **dadurch gekennzeichnet, dass** die Befestigungsfolie (4) auf die Schicht aus weniger wärmebeständigem Schaumstoff (3) aufkaschiert ist.

11. Isolierelement nach einem der Ansprüche 1 bis 10, **dadurch gekennzeichnet, dass** es als Schaumstoffbahn oder -lage vorgesehen ist.

12. Isolierelement nach einem der Ansprüche 1 bis 10, **dadurch gekennzeichnet, dass** es als Schaumstoffplatte oder -matte vorgesehen ist.
